# EUROPEAN PATENT APPLICATION

(11) **EP 4 813 560 A1**
(43) Date of publication of application: **30.09.2026**
(21) Application number: 25382308.2
(22) Date of filing: 28.03.2025
(51) Int. Cl.: B23K 26/08, B23K 26/38, B23K 37/04, B23Q 11/00, B65G 23/44, B23K 101/18

(54) **LASER CUTTING INSTALLATION FOR CUTTING SHEETS OF A SOLID MATERIAL WITH PROVISION OF COMPENSATION MECHANISMS**

(71) Applicant: FAGOR ARRASATE, S.COOP., 20500 Arrasate (ES)
(72) Inventor: PEÑARANDA ROVIRA, Xabier, 20500 Arrasate-Mondragon (ES); ARANZABAL ECHANIZ, Aitor, 20500 Arrasate-Mondragon (ES); LOIDI ETXABE, Mikel, 20500 Arrasate-Mondragon (ES); GONZALEZ ELORZA, Aranzazu, 20500 Arrasate-Mondragon (ES); BEUDAERT, Xavier Mathieu, 20870 Elgoibar (Gipuzkoa) (ES); OIER, Franco Dobaran, 20870 Elgoibar (Gipuzkoa) (ES)
(74) Representative: Galbaian S.Coop.

(57) **Abstract**

The invention relates to a cutting installation (1000) comprising a laser head (6), a first transport device (1) and a second transport device (2) arranged downstream of the first transport device (1) in a transport direction (T) and separated from said first transport device (1) by a gap (5). Each transport device (1, 2) comprises a band (1.3, 2.3) supported by at least one respective first roller (1.R1, 2.R1) and one respective second roller (1.R5, 2.R5) arranged at different heights and movable in the transport direction and in the opposite direction. The installation (1000) comprises a compensating mechanism for each transport device (1, 2), each compensating mechanism comprising a block (8.1A, 8.2A, 8.1B, 8.2B) for each roller (1.R1, 1.R5; 2.R1, 2.R5) and a tensioning element (8.10 8.20) connected between the two blocks (8.1A, 8.2A, 8.1B, 8.2B) respective.

## Description

### TECHNICAL FIELD

The present invention relates to installations for laser cutting of sheets of a solid material, preferably metal sheets.

### PRIOR ART

It is known to cut sheets to obtain parts with the desired shapes and sizes. One of the known methods is laser cutting, which is applied to the sheet by means of a laser head.

In installations where this type of cutting is carried out, it is common to use two transport bands to transport the sheet in a given transport direction, and the transport bands are separated by a gap in this transport direction. The head is positioned above the gap to emit the laser, so that the laser passing through the sheet after cutting does not damage any of the transport bands.

In order to be able to cut different shapes, and/or to improve the productivity of the installation, it is common to be able to move the head at least in the transport direction and in the opposite direction. This leads to the need to have to move the gap in these directions as well. DE102004034256B4 discloses a laser cutting installation, in which the gap is moved in the transport direction and in the opposite direction as required.

### DISCLOSURE OF THE INVENTION

The object of the invention is to provide a laser cutting installation, as defined in the claims.

The installation comprises a movable laser head for cutting a sheet of a solid material (preferably metal) as the sheet moves in a transport direction. The installation further comprises a first transport device and a second transport device which is arranged downstream of the first transport device in the transport direction, on which the sheet is transported, the transport devices being separated in the transport direction by a certain gap. The laser head is arranged over the gap to cut the sheet in such a way that the emitting laser does not damage the transport devices once it passes through the sheet it cuts.

The first transport device comprises a movable transport band on which the sheet to be cut is arranged, and at least one upper support roller and one lower support roller supporting the transport band, which are arranged at different heights and are movable in the transport direction and in the opposite direction. The second transport device comprises a movable transport band on which the sheet is arranged, and at least one upper support roller and one lower support roller supporting the arranged, which are arranged at different heights and which are movable in the transport direction and in the opposite direction. The gap is defined between the two upper support rollers. The movable transport bands comprise a certain tension for being able to transport the sheets.

The installation further comprises at least one respective compensating mechanism joined to each transport device, the compensating mechanisms being independent from each other. Each compensating block comprises an upper compensating block joined to the upper support roller and a lower compensating block joined to the lower support roller of the respective transport device, such that the compensating block moves in the transport direction and in the opposite direction together with the support roller with which it is associated. Each of these support rollers is joined to the corresponding compensating block with the possibility of rotation.

Each compensating mechanism comprises a tensioning element connected to the corresponding upper compensating block and the corresponding lower compensating block, for each transport device (each transport band). The tensioning element of the compensating mechanism of the first transport device is configured to exert a specified compensating force in the transport direction, and the tensioning element of the compensating mechanism of the second transport device is configured to exert a specified compensating force in the direction opposite to the transport direction. These compensating forces help then in the tensioning of the corresponding transport band to the required tension

In order to be able to have high speeds and accelerations in transport devices, it is necessary to tension the transport bands appropriately. This tension is higher the higher the required speed and/or acceleration and generates forces that have to be supported by the elements cooperating with the corresponding transport band (an actuator to cause its movement, the support rollers, etc.), these forces being higher the higher the tension.

To date, this has meant having to dimension these elements to be able to withstand these high forces and to select materials that can withstand them, which can limit the speed and/or acceleration of the transport device. Thanks to the compensating mechanisms of the proposed installation, each the movable transport bands can be tensioned as required and in an independent manner (being able then to adjust to the requirements of each transport band), at the same time as said tensions can remain stable, each tensioning element being then able to support and compensate for the forces generated in the corresponding transport band.

The forces generated by the transport band of the first tensioning device are exerted in the direction opposite to the transport direction, whereby the compensating force exerted by the compensating mechanism of the first transport device is able to compensate for these forces of the transport band. The forces exerted by transport band of the second tensioning device are exerted in the transport direction, whereby the compensating force exerted by the compensating mechanism of the second transport device is capable of compensating such forces of the tension band.

Thus, the tensioning elements are the ones that support the forces generated by the tension bands, and the speed and acceleration of the transport bands can be increased without having a negative impact on the installation and without having to change the elements that cooperate with the corresponding transport band (rollers, guides, etc.) or without having to resize these elements. It is also important to highlight the fact that the compensation mechanisms are directly associated with the support rollers of the transport bands, which makes it easier for these forces not to be transmitted to other elements such as those that enable the movement of the gap in the transport direction and in the opposite direction (rollers, guides, etc.) and the speed and acceleration can be increased.

These and other advantages and features of the invention will become apparent in view of the figures and the detailed description of the invention.

### DESCRIPTION OF THE DRAWINGS

Figure 1 shows a perspective view of a laser cutting installation according to the invention, without a laser head.
Figure 2 shows a side and schematic view of transport devices of the installation shown in figure 1.

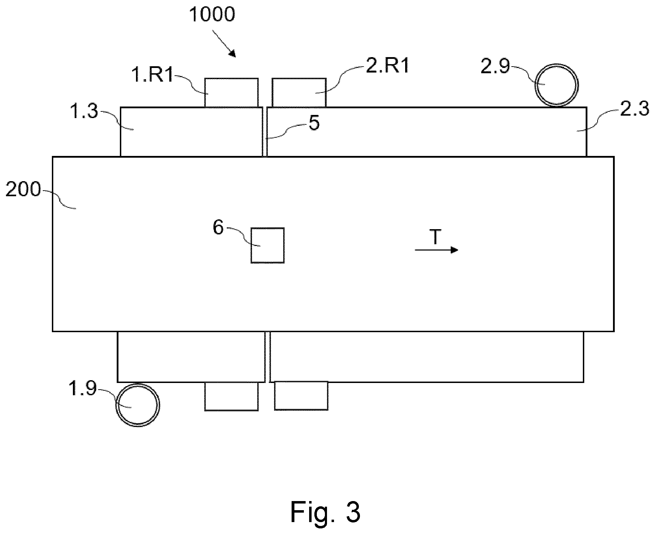

Figure 3 shows a plan view of the transport devices of figure 2, with a sheet.
Figure 4a shows a compensating mechanism of a first transport device of the installation of figure 1.
Figure 4b shows a compensating mechanism of a second transport device of the installation of figure 1.

### DETAILED DISCLOSURE OF THE INVENTION

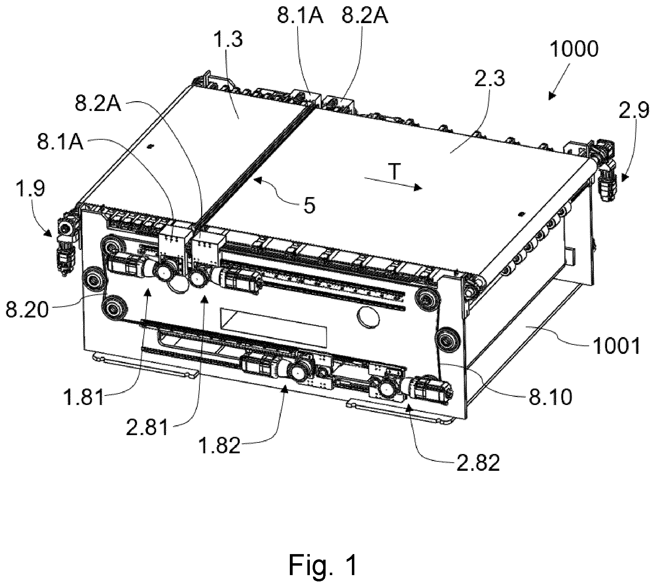

The proposed installation 1000, as shown by way of example in figure 1, is an installation 1000 adapted for laser cutting sheets 200 of a solid material (preferably metal sheet). The installation 1000 comprises a movable laser head 6 which is configured to emit a laser onto the sheet 200 to cut it, preferably from above, and a control unit not shown in the figures, for controlling the movement of the head 6 in order to cut the desired shape of the sheet 200.

The installation 1000 further comprises a transport unit for transporting the sheet 200 during cutting in a transport direction T which is preferably horizontal, so that the installation 1000 can have a high productivity. The laser emitted by the head 6 passes through the sheet 200 after cutting and therefore, in order to avoid causing damage to the transport unit, the transport unit is divided into a first transport device 1 and a second transport device 2 separated by a gap 5 in the transport direction T, so that the laser can pass through the gap 5 and does not damage the transport unit. The second transport device 2 is arranged downstream of the first transport device 1 in the transport direction T as shown in the figures.

The control unit is configured to act on the transport devices 1 and 2 to move the gap 5 in the transport direction T and in the opposite direction, to the same extent as does the head 6, and the installation 1000 comprises at least one block actuator 1.81 and 1.82, and 2.81 and 2.82 associated with each transport device 1 and 2 in order to move the gap 5. Preferably the size of the gap 5 is kept constant, but it could be modified in a simple way if required.

The first transport device 1 comprises a movable transport band 1.3, which may comprise a conveyor belt, on which the sheet 200 to be cut is arranged, and a band actuator 1.9 for moving the transport band 1.3 and thereby causing the sheet 200 to move in the transport direction T. The band actuator 1.9 may comprise a motor for example, and the control unit is configured to control the actuation of the band actuator 1.9.

The second transport device 2 comprises a movable transport band 2.3, which may comprise a conveyor belt, on which the sheet 200 moves, and a band actuator 2.9 for moving the transport band 2.3 and thereby causing the sheet 200 to move in the transport direction T. The band actuator 2.9 may comprise a motor for example, and the control unit is configured to control the action of the band actuator 2.9.

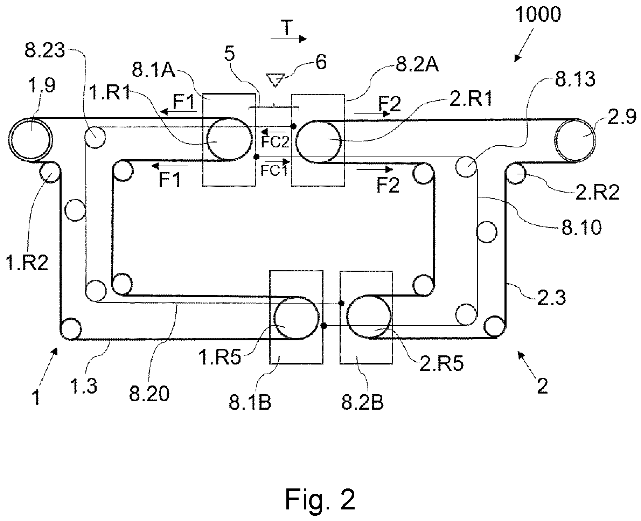

The transport band 1.3 is supported by at least one upper support roller 1.R1 and one lower support roller 1.R5 of the first transport device 1, which are arranged at different heights. In turn, the transport band 2.3 is also supported by at least one upper support roller 2.R1 and one lower support roller 2.R5 of the second transport device 2, which are arranged at different heights. The upper support rollers 1.R1 and 2.R1 face each other in the transport direction T (with the transport bands 1.3 and 2.3 in between), and the lower support rollers 1.R5 and 2.R5 face each other in the transport direction T (with the transport bands 1.3 and 2.3 in between). The gap 5 is defined between the upper support rollers 1.R1 and 2.R1 (see figure 2, where a frame 1001 of the installation 1000 is not shown for clarity).

The upper support rollers 1.R1 and 2.R1 and the lower support rollers 1.R5 and 2.R5 are movable in the transport direction T and in the opposite direction, allowing to move the gap 5. The installation 1000 comprises a respective block actuator 1.81 and 1.82 for causing the movement of each of the support rollers 1.R1 and 1.R5 of the transport band 1.3 of the first transport device 1 when actuated and a respective block actuator 2.81 and 2.82 for causing the movement of each of the support rollers 2.R1 and 2.R5 of the transport band 2.3 of the second transport device 2 when actuated. The control unit is configured to control the actuation of said block actuators 1.81, 1.82, 2.81 and 2.82, and causes said block actuators 1.81, 1.82, 2.81 and 2.82 to cause the same displacement, in the same direction and simultaneously of all support rollers 1.R1, 1.R5, 2.R1 and 2.R5. Each transport device 1 and 2 preferably comprises at least one additional roller 1.R2 and 2.R2 supporting the corresponding transport band 1.3 and 2.3. The machine 1000 comprises elements not shown in the figures, such as rollers and/or guides, to facilitate and guide the movement of the support rollers 1.R1, 1.R5, 2.R1 and 2.R5 when the block actuators 1.81, 1.82, 2.81 and 2.82 are actuated.

The transport band 1.3 comprises a section extending in the transport direction T, on which the sheet 200 is arranged on this section. Said section may extend between the upper support roller 1.R1 and the band actuator 1.9, as shown in figure 2, or it may extend between the upper support roller 1.R1 and one of the additional rollers (embodiment not shown in the figures).

The transport band 2.3 comprises a section extending in the transport direction T, with the sheet 200 lying on this section. Said section may extend between the upper support roller2.R1 and the band actuator 2.9, as shown in figure 2, or it may extend between the upper support roller 2.R1 and one of the additional rollers (embodiment not shown in the figures).

The tension to which a transport band 1.3 or 2.3 is subjected causes respective forces F1 and F2 around the support rollers 1.R1 and 1.R5, and 2.R1 and 2.R5 (for clarity, figure 2 identifies forces F1 and F2 only around the upper support rollers 1.R1 and 2.R1), on the corresponding transport band 1.3 and 2.3. The transport band 1.3 and 2.3 partially surrounds the corresponding support roller 1.R1, 1.R5, 2.R1 and 2.R5, supporting two forces F1 and F2 as depicted in figure 2. The forces F1 supported by the transport band 1.3 are in the direction opposite to the transport direction T, and the forces F2 supported by the transport band 2.3 are in the transport direction T (see figure 2).

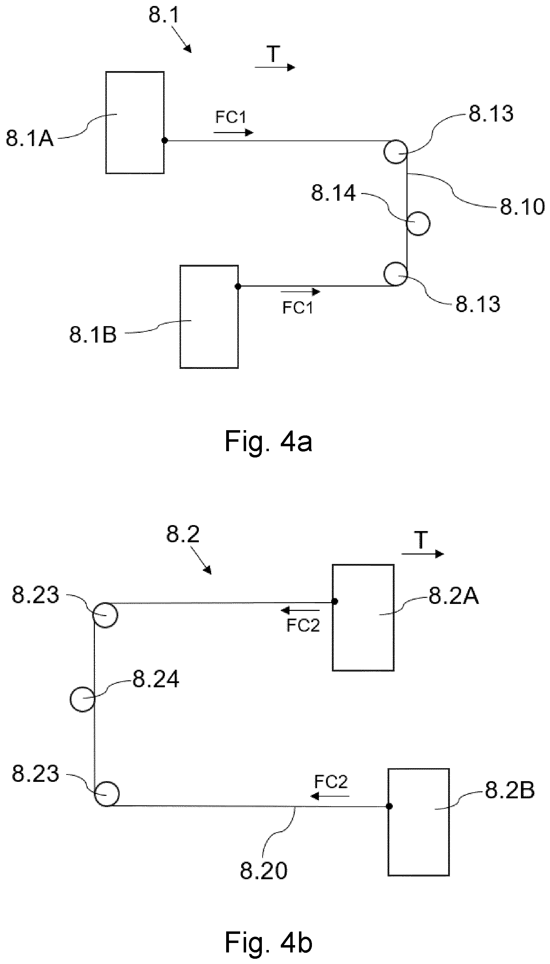

These forces F1 and F2 or tensions are the result of the tension of the corresponding transport band 1.3 or 2.3. The higher the desired speed and acceleration of a transport band 1.3 or 2.3, the higher the tension at which the transport band 1.3 or 2.3 is arranged in order to avoid incorrect displacement of the sheet 200 (e.g. to prevent it from slipping). In order to compensate for these forces F1 and F2, the proposed installation 1000 comprises at least one respective compensating mechanism 8.1 and 8.2 for each transport device 1 and 2 (see figures 4a and 4b).

Each compensating block 8.1 and 8.2 comprises a respective upper compensating block 8.1A and 8.2A joined to the respective upper support roller 1.R1 and 2.R1, a respective lower compensating block 8.1B and 8.2B joined to the respective lower support roller 1.R5 and 2.R5, and a respective tensioning element 8.10 and 8.20 connected to the two compensating blocks 8.1A and 8.1B, 8.2A and 8.2B. Each compensating block 8.1A and 8.1B, 8.2A and 8.2B moves in the transport direction T and in the opposite direction, together with the support roller 1.R1, 1.R5, 2.R1 and 2.R5 to which it is joined. Preferably, the block actuators 1.81, 1.82, 2.81 and 2.82 directly cause the movement of the compensation blocks 8.1A and 8.1B, 8.2A and 8.2B, with the support rollers 1.R1, 1.R5, 2.R1 and 2.R5 moving together with said compensation blocks 8.1A and 8.1B, 8.2A and 8.2B.

The tensioning element 8.10 of the compensating mechanism 8.1 of the first transport device 1 is tensioned in such a way that it exerts a compensating force FC1 against the forces F1 supported by the transport band 1.3. In this way, the tensioning element 8.10 absorbs or compensates said forces F1 of the corresponding transport band 1.3, these forces F1 not having to be supported, for example, by the block actuators 1.81 and 1.82. Preferably each block actuator 1.81 and 1.82 is coupled to a respective compensating block 8.1A and 8.1B, whereby the power of said actuator blocks 1.81 and 1.82 can be reduced. The compensating force FC1 is exerted in the direction of travel T, opposite to the forces F1.

The tensioning element 8.20 of the compensating mechanism 8.2 of the second transport device 2 is tensioned in such a way that it exerts a compensating force FC2 against the forces F2 supported by the transport band 2.3. In this way, the tensioning element 8.20 absorbs or compensates these forces F2 of the corresponding transport band 2.3 and said forces F2 do not have to be supported, for example, by the block actuators 2.81 and 2.82. Preferably each block actuator 2.81 and 2.82 is coupled to a respective compensating block 8.2A and 8.2B ç, whereby the power of said block actuators 2.81 and 2.82 can be reduced. The compensating force FC2 is exerted in the direction opposite to the direction of travel T, opposite to the forces F2.

A tensioning element 8.10 and 8.20 may be a cable, wire, thread, belt or any other analogous element which may be under tension, so that the forces F1 and F2 generated in the corresponding transport band 1.3 and 2.3 can be compensated by this tension.

Each support roller 1.R1, 1.R5, 2.R1 and 2.R5 is attached to its corresponding compensating block 8.1A, 8.2A, 8.1B and 8.2B with the possibility of rotation, and will rotate when the corresponding transport band 1.3 and 2.3 is moved, to facilitate this movement.

Each compensating mechanism 8.1 and 8.2 further comprises at least one respective element roller 8.13 and 8.23, preferably acting as a pulley, which is arranged in the path of the tensioning element 8.10 and 8.20 between the two corresponding compensating blocks 8.1A, 8.2A, 8.1B and 8.2B and which is configured to support the corresponding tensioning element 8.10 and 8.20. The element roller 8.13 of the compensating mechanism 8.1 of the first transport device 1 is arranged downstream of the compensating blocks 8.1A and 8.1B in the transport direction T (see figure 4a), and the element roller 8.23 of the compensating mechanism 8.2 of the second transport device 2 is arranged upstream of the compensating blocks 8.2A and 8.2B in the transport direction T (see figure 4b).

Preferably each compensating mechanism 8.1 and 8.2 comprises a tensioning device for adjusting the tension of the corresponding tensioning element 8.10 and 8.20 with its actuation. In some embodiments, such as that shown in the figures, the tensioning device comprises a tensioning roller 8.14 and 8.24, which is surrounded by the corresponding tensioning element 8.10 and 8.20 (or to which said tensioning element 8.10 and 8.20 is attached) and which acts as a tensioner. The tension of the tensioning element 8.10 and 8.20 can be adjusted by causing the corresponding tensioning roller 8.14 and 8.24 to move in the transport direction T or in the opposite direction. In other embodiments not shown in the figures, the tensioning device comprises a tensioner associated with one of the compensating blocks 8.1A, 8.2A, 8.1B, 8.2B and the corresponding tensioning element 8.10 and 8.20.

In order to be able to compensate the forces F1 and F2 more easily it is preferable that the tensioning elements 8.10 and 8.20 have sections extending from each compensating block 8.1A, 8.2A, 8.1B and 8.2B in the transport direction T (or the opposite direction), as this is the direction in which the forces F1 and F2 are generated. For this purpose, preferably, each compensating mechanism 8.1 and 8.2 comprises two element rollers 8.13 and 8.23 which are arranged in the path of the tensioning element 8.10 and 8.20 between the two compensating blocks 8.1A, 8.2A, 8.1B and 8.2B and which are configured to support the corresponding tensioning element 8.10 and 8.20, the direction of said tensioning element 8.10 and 8.20 being changed by cooperating with each element roller 8.13 and 8.23. These two element rollers 8.13 and 8.23 of each compensating mechanism 8.1 and 8.2 are arranged at different heights and, preferably, each element roller 8.13 and 8.23 of each compensating mechanism 8.1 and 8.2 is arranged in such a way that the tensioning element extends in the transport direction T (or in the opposite direction) between an element roller 8.13 and 8.23 and the corresponding compensating block 8.1A, 8.2A, 8.1B and 8.2B, the compensation of the forces F1 and F2 being facilitated. Preferably, in addition, the element rollers 8.13 and 8.23 of each compensating mechanism 8.1 and 8.2 are vertically aligned. In the embodiment shown in the figures, the tensioning roller 8.14 and 8.24 is preferably arranged between two corresponding element rollers 8.13 and 8.23 in the path of the corresponding tensioning element 8.10 and 8.20.

Preferably the installation 1000 comprises two compensating mechanisms associated with each transport device 1 and 2, and the two compensating mechanisms of each one of the transport devices 1 and 2 are equal and are arranged in parallel in a direction transverse to the transport direction T. Each upper support roller 1.R1 and 2.R1 is associated with the upper compensating block 8.1A and 8.2A of the two compensating mechanisms 8.1 and 8.2 associated with the same transport device 1 and 2, and each lower support roller 1.R5 and 2.R5 is associated with the lower compensating block 8.1B and 8.2B of the two compensating mechanisms 8.1 and 8.2 associated with the same transport device 1 and 2.

## Claims

1. Laser cutting installation for cutting sheets of a solid material, the installation (1000) comprising a movable laser head (6) configured to emit a laser for cutting a sheet (200), and a first transport device (1) and a second transport device (2) for transporting the sheet (200) in a transport direction (T), the second transport device (2) being arranged downstream of the first transport device (1) in the transport direction (T) and separated from the first transport device (1) in the transport direction (T) by a gap (5), the first transport device (1) comprising a transport band (1.3) supported by at least one upper support roller (1.R1) and one lower support roller (1.R5) arranged at different heights and movable in the direction of transport (T) and in the opposite direction, and the second transport device (2) comprising a transport band (2.3) supported by at least one upper support roller (2.R1) and one lower support roller (2.R5) arranged at different heights and movable in the transport direction (T) and in the opposite direction, the gap (5) being defined between the upper support roller (1.R1) of the first transport device (1) and the upper support roller (2.R1) of the second transport device (2), **characterised in that** the installation (1000) comprises at least one compensating mechanism (8.1, 8.2) associated with each transport device (1, 2), each compensating mechanism (8.1, 8.2) comprising a respective upper compensating block (8.1A, 8.2A) joined to the respective upper support roller (1.R1, 2.R1), a respective lower compensating block (8.1B, 8.2B) joined to the respective lower support roller (1.R5, 2.R5), and a respective tensioning element (8.10, 8.20) respectively connected to the upper compensating block (8.1A, 8.2A) and the lower compensating block (8.1B, 8.2B) of the corresponding compensating mechanism (8.1, 8.2), each support roller (1.R1, 2.R1, 1.R5, 2.R5) being joined to the corresponding compensation block (8.1A, 8.2A, 8.1B, 8.2B) with the possibility of rotation, the tensioning element (8.10) of the compensating mechanism (8.1) of the first transport device (1) is configured to exert a determined compensating force (FC1) in the transport direction (T) and the tensioning element (8.20) of the compensating mechanism (8.2) of the second transport device (2) is configured to exert a determined compensating force (FC2) in the direction opposite to the transport direction (T).

2. Laser cutting installation according to claim 1, wherein the tensioning element (8.10, 8.20) of each compensating mechanism (8.1, 8.2) is configured to be in tension and to exert the corresponding compensating force (FC1, FC2) of a value that depends on the tension of said tensioning element (8.10, 8.20).

3. Laser cutting installation according to claim 1 or 2, wherein each compensating mechanism (8.1, 8.2) comprises a tensioning device configured to adjust the tension of the corresponding tensioning element (8.10, 8.20) with its actuation.

4. Laser cutting installation according to claim 3, wherein each tensioning device comprises a tensioning roller (8.14, 8.24) which is arranged in the path of the corresponding tensioning element (8.10, 8.20) between the two compensating blocks (8.1A, 8.2A, 8.1B, 8.2B) and which is surrounded by the corresponding tensioning element (8.10, 8.20), said tensioning roller (8.14, 8.24) being configured to adjust the tension of the tensioning element (8.10, 8.20) with its displacement in the transport direction (T) or in the opposite direction.

5. Laser cutting installation according to claim 3, wherein each tensioning device comprises at least one tensioner associated with one of the compensating blocks (8.1A, 8.2A, 8.1B, 8.2B) and the corresponding tensioning element (8.10, 8.20), said tensioner being configured to adjust the tension of the tensioning element (8.10, 8.20) with its actuation.

6. Laser cutting installation according to any of claims 1 to 5, wherein each tensioning element (8.10, 8.20) comprises a cable or a belt.

7. Laser cutting installation according to any of claims 1 to 6, comprising a respective block actuator (1.81, 1.82, 2.81, 2.82) associated with each compensating block (8.1A, 8.2A, 8.1B, 8.2B), each block actuator (1.81, 1.82, 2.81, 2.82) being configured to move the compensating block (8.1A, 8.2A, 8.1B, 8.2B) in the transport direction (T) and in the opposite direction.

8. Laser cutting installation according to any of claims 1 to 7, wherein each compensating mechanism (8.1, 8.2) comprises at least one element roller (8.13, 8.23) which is arranged in the path of the tensioning element (8.10, 8.20) between the two compensating blocks (8.1A, 8.2A, 8.1B, 8.2B) concerned and which is configured to support and change the direction of the tensioning element (8.10, 8.20) concerned, the element roller (8.13) of the compensating mechanism (8.1) of the first transport device (1) is arranged upstream of the corresponding compensating blocks (8.1A, 8.1B) in the transport direction (T) and the element roller (8.23) of the compensating mechanism (8.2) of the second transport device (2) is arranged downstream of the corresponding compensating blocks (8.2A, 8.2B) in the transport direction (T).

9. Laser cutting installation according to claim 8, wherein each compensating mechanism (8.1, 8.2) comprises at least two element rollers (8.13, 8.23) arranged in series in the path of the corresponding tensioning element (8.10, 8.20) between the two compensating blocks (8.1A, 8.2A, 8.1B, 8.2B) and configured to support and change the direction of the corresponding tensioning element (8.10, 8.20), the two element rollers (8.13, 8.23) of each compensating mechanism (8.1, 8.2) being arranged at different heights.

10. Laser cutting installation according to claim 9, wherein each element roller (8.13, 8.23) of each compensating block (8.1, 8.2) is arranged such that the tensioning element (8.10, 8.20) is extended in the transport direction (T) or in the opposite direction in its travel between an element roller (8.13, 8.23) and the nearest corresponding compensating block (8.1A, 8.2A, 8.1B, 8.2B).

11. Laser cutting installation according to claim 9 o 10, wherein the element rollers (8.13, 8.23) of each compensating mechanism (8.1, 8.2) are vertically aligned.

12. Laser cutting installation according to any of claims 1 to 11, wherein the compensation mechanism (8.1) of the first transport device (1) and the compensation mechanism (8.2) of the second transport device (2) are independent.

13. Laser cutting installation according to any of claims 1 to 12, wherein the lower support roller (1.R5) of the first transport device (1) is downstream the upper support roller (1.R1) of the first transport device (1) in the transport direction (T), and wherein the lower support roller (2.R5) of the second transport device (2) is upstream the upper support roller (2.R1) of the second transport device (2) in the transport direction (T).

14. Laser cutting installation according to any of claims 1 to 13, wherein the first transport device (1) comprises a band actuator (1.9) to cause movement of its transport band (1.3), and wherein the second transport device (2) comprises a band actuator (2.9) to cause movement of its transport band (2.3).

15. Laser cutting installation according to any of claims 1 to 14, comprising two compensating mechanisms (8.1, 8.2) associated with each transport device (1, 2), the two compensating mechanisms (8.1, 8.2) of each transport device (1, 2) being equal and the two compensating mechanisms (8.1, 8.2) of each transport device (1, 2) being arranged in parallel in a direction transverse to the transport direction (T), each upper support roller (1.R1, 2.R1) being associated with the upper compensating block (8.1A, 8.2A) of the two compensating mechanisms (8.1, 8.2) associated with the same transport device (1, 2), and each lower support roller (1.R5, 2.R5) being associated with the lower compensating block (8.1B, 8.2B) of the two compensating mechanisms (8.1, 8.2) associated with the same transport device (1, 2).
